# EUROPEAN PATENT APPLICATION

(11) **EP 2 575 362 A1**
(43) Date of publication of application: **03.04.2013**
(21) Application number: 11306238.4
(22) Date of filing: 28.09.2011
(51) Int. Cl.: H04N 7/14

(54) **Multimodal mobile video telephony**

(71) Applicant: ST-Ericsson SA, 1228 Plan-les-Ouates (CH)
(72) Inventor: Lesellier, Estelle, 92190 MEUDON (FR); Miro Sorolla, Carolina Maria, 92210 SAINT CLOUD (FR)
(74) Representative: Cabinet Plasseraud

(57) **Abstract**

The invention concerns a method of generating a video stream in a mobile device (21), the mobile device comprising at least first and second picture acquisition means (22.1;22.2) and at least a first and a second microphone (23.1;23.2), the first microphone and the first picture acquisition means being adapted to acquire data in a first common zone (28.1) in relation to the mobile device, the second picture acquisition means and second microphone being adapted to acquire data in a second common zone (28.2) in relation to the mobile device. The method comprises acquiring at least a first audio sequence from the first microphone and a second audio sequence from the second microphone, selecting a relevant zone comprising a current speaker among the first common zone and the second common zone, based on the first and second audio sequences, selecting at least one picture from the camera which is adapted to acquire data in the relevant zone and generating the video stream including the selected picture.

## Description

### BACKGROUND

### Technical Field

The present invention generally relates to video telephony applications.

It finds application in particular, while not exclusively, in any mobile communication devices such as smartphones for example.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

In current smartphones, such as Apple™ iPhone 4 or Samsung™ Galaxy, video telephony is a widespread implemented functionality on the market and this functionality enables simultaneous visual and audio connection between people at any time and place.

Generally, such smartphones include a microphone, which is often omni-directional and can be re-usable for other video record applications for instance, and a camera on its front side (referred hereafter as "secondary camera"), which is positioned near to the screen and which is dedicated to video telephony applications.

During a video telephony session with another user of another smartphone, the secondary camera is in charge of recording a video of the phone user face, which will be simultaneously displayed in Picture-In-Picture format on the device screen and transmitted to the other smartphone of the other user.

However, some limitations are inherent to the use of such portable devices for video telephony. Indeed, constrained form factors such as small display size, handhold device without tripod, of mobile phones and other portable devices deeply limit their usability and ease of use, compared to static video conferencing systems installed in conference rooms for example. In particular, the single usage of the secondary camera coupled to the need of holding the device at arm distance constrains the number of recordable faces and participants.

Furthermore, form factors such as the small size of the mobile phone screen for example, constrain the number of side-by-side displayable faces. Indeed, it becomes difficult to clearly discern people facial expression when several faces are displayed side-by-side.

To cope with the problem of multiple participants, in videoconferencing applications with dedicated static equipments, which are not portable, some known techniques propose a method based on the construction of a panoramic image based on the stitching of the content captured by several video cameras. The captured panoramic image then forms a panoramic stream that is sent to a remote user to be displayed as a panoramic image or as a zoom portion of the image manually or automatically defined.

However, such techniques are not adapted for mobile video telephony because the transmission of a panoramic stream is bandwidth expensive. If down-sampling techniques would be applied to the panoramic stream to reduce the bandwidth, the quality of the decoded stream at the remote user side would also be reduced. Moreover, it supposes the presence of multiple cameras on the device, which raises the cost and form factor issues.

Thus, there is a need to ensure a sufficient video and audio recording quality on a portable device during a video telephony session, without limiting the number of possible co-sited participants.

### SUMMARY OF THE INVENTION

To address these needs, a first aspect of the present invention relates to a method of generating a video stream in a mobile device, the mobile device comprising at least first and second picture acquisition means and at least a first and a second microphones (or a microphone array), the first microphone and the first picture acquisition means being adapted to acquire data in a first common zone in relation to the mobile device, the second picture acquisition means and second microphone being adapted to acquire data in a second common zone in relation to the mobile device. The method comprises:
- acquiring at least a first audio sequence from the first microphone and a second audio sequence from the second microphone;
- selecting a relevant zone comprising a current speaker among the first common zone and the second common zone, based on the first and second audio sequences;
- selecting at least one picture from the camera which is adapted to acquire data in the relevant zone;
- generating the video stream including the selected picture.

Thus, the present invention enables to use both first and second picture acquisition means (typically a primary camera and a secondary camera) of a mobile device to generate a video stream, for example in the context of a mobile video telephony session on a smartphone. Thus, by using both cameras, the possible number of co-sited participants to such a session is increased. In addition, instead of multiplexing the pictures from both cameras, the present invention proposes to select the pictures from a given camera which are currently representing the speaker, based on audio sequences simultaneously acquired by the microphones of the mobile device. The video stream can result from the temporal concatenation of selected pictures.

According to some embodiments of the invention, the method further comprises, before selecting a relevant zone:
- performing a face detection algorithm by the first and second picture acquisition means to respectively determine at least one relevant part of the first common zone representative of a first speaker and at least one second relevant part of the first common zone representative of a second speaker.

The relevant zone is a relevant part chosen among the first relevant part and the second relevant part, by an audio space sectorisation algorithm to determine the current speaker among the first and second speakers.

These embodiments enable to produce more reliable current speaker detection by using a multimodal detection, which is based on audio and video data, with fewer detection errors. The accuracy of the method is thus improved.

Alternatively, the method can further comprise, before selecting a relevant zone:
- performing a face detection algorithm by the first and second picture acquisition means to respectively determine at least one relevant part of the first common zone representative of a first speaker and at least one second relevant part of the first common zone representative of the second speaker.
   The relevant zone is a relevant part chosen among the first relevant part and the second relevant part, by a lips motion analysis by the first picture acquisition means in the first relevant part and by the second picture acquisition means in the second relevant part.

Such embodiments also propose an alternative to determine with accuracy the location of the current speaker and thus to provide a more reliable current speaker detection.

In complement, the at least one selected picture from the camera which is adapted to acquire data in the relevant zone can be obtained by zooming in the relevant part.

Such embodiments enable to improve the quality level of the speaker communication, as only the face (for example) of the current speaker can be displayed. This solution is particularly adapted for mobile devices, which screens are often small. By zooming on the current speaker face, only relevant pictures can be used to generate the video stream.

According to some embodiments of the invention, the method further comprises selecting the audio sequence from the microphone which is adapted to acquire data in the relevant zone, and the selected audio sequence is embedded in the video stream.

Such embodiments enable to improve the accuracy of the method in audio domain. Indeed, while detecting the location of the current speaker on a given common zone, there is no use transmitting the audio sequence acquired in the other common zone. By 'embedded', it is understood that video sequences can be jointly transmitted with the video stream.

In complement, the method can further comprise, after selecting the audio sequence:
- modifying the selected audio sequence by performing an audio focus in the relevant part, the modified audio sequence being embedded in the video stream.

Thus, these embodiments enable to make more understandable the speaker communication, as only the voice of the current speaker is recorded or transmitted by the mobile device.

Still in complement, modifying the selected audio sequence also comprises decreasing an audio signal level in at least one part of a zone which differs from the relevant part.

Such embodiments enable to further increase the accuracy of the audio focus, by only recording or transmitting the voice of the current speaker, and by decreasing the audio level of other voices or environmental noise.

In some embodiments, the method further comprises:
- measuring a size of a face of the current speaker;
- equalizing the selected audio sequence based on the measured size;
   the equalized audio sequence being embedded in the video stream.

Such embodiments enable to adapt an audio level of an audio sequence depending on the distance at which the current speaker is located (from the microphone). The size of the face of the current speaker can be determined by measuring a distance skull-chin in the relevant zone, when the location of the current speaker has been determined.

According to some embodiments, the first and second microphones are - directional.

Still in other embodiments, selecting a relevant zone is based on a comparison between a first audio signal level of the first audio sequence and a second audio signal level of the second audio sequence.

Such embodiments enable to select a relevant zone based on only one comparison, which is easy to implement.

A second aspect of the invention concerns a mobile device comprising at least a first and a second picture acquisition means, the mobile device further comprising at least a first and a second microphones, the first microphone and the first picture acquisition means being adapted to acquire data in a first common zone, the second picture acquisition means and second microphone being adapted to acquire data in a second common zone, wherein the first microphone is adapted to acquire a first audio sequence and the second microphone is adapted to acquire a second audio sequence, the device further comprising:
- a zone selection unit for selecting a relevant zone comprising a current speaker among the first common zone and the second common zone, based on the first and second audio sequences;
- a picture selection unit for selecting at least one picture from the camera which is adapted to acquire data in the relevant zone;
- a stream generation unit for generating a video stream including the selected picture.

According to some embodiments, the mobile device further comprises an audio selection unit for selecting the audio sequence from the microphone which is adapted to acquire data in the relevant zone, and the video stream further includes the selected audio sequence.

In some embodiments, the first and second microphones are -directional.

According to some embodiments of the invention, the first picture acquisition means are located at a first side of the mobile device and the second picture acquisition means are located on a second side of the mobile device, and the mobile device further comprises first and second displaying means, the first and second displaying means being respectively located on the first side and on the second side and being adapted to display the video stream.

Such embodiments enable to display the video stream on both sides of the mobile device, so that speakers located on both sides can see what is recorded and with whom they are speaking (speaker or speakers on a remote mobile device for example).

A third aspect of the invention concerns a computer program product comprising a computer readable medium having stored thereon computer program instructions loadable into a computing device and adapted to - when loaded into and executed by the computing device - cause the computing device to perform a method according to the first aspect of the invention.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- Figure 1 illustrates a known configuration of a video telephony session on a mobile device;
- Figure 2 represents a configuration of a video telephony session on a mobile device, according to some embodiments of the invention;
- Figure 3 illustrates a flowchart representing the steps of the method according to some embodiments of the invention;
- Figure 4 illustrates a flowchart representing the steps of a method according to an enhanced implementation of the invention;
- Figure 5 represents a detailed structure of the mobile device illustrated on Figure 2, according to some embodiments of the invention.

### DESCRIPTION OF PREFERRED EMBODIMENTS

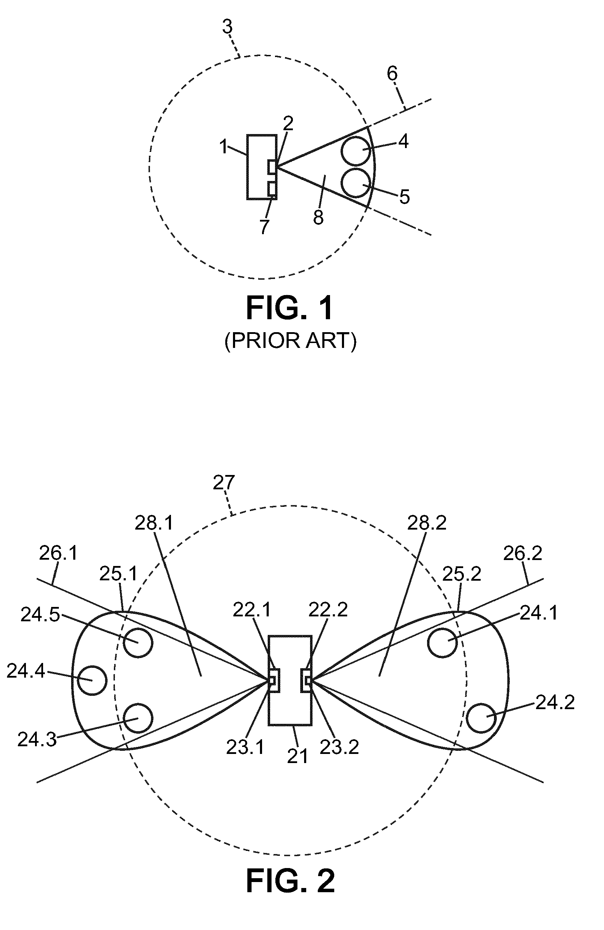

Referring to Figure 1, there is shown a known configuration of a video telephony session on a mobile device 1.

The mobile device 1 comprises a camera 2 and an omni-directional microphone 7. A first user 4 is holding the mobile device 1. A zone 3 is defined as a circle having the mobile device 1 (and more precisely the omni-directional microphone 7) as centre and having a radius depending on the intrinsic features of the microphone 7. In addition, the first user 4 can be at most at a given distance from the mobile device 1, which is limited by the length of his arm.

A camera field of view 6 may be also defined for the camera 2 and based on intrinsic features of the camera 2, such as the focal length of the camera 2. The intersection between the zone 3 and the camera field of view 6 defines a workable zone 8, in which users can be located to communicate during a video telephony session. In the system represented on Figure 1, it is still possible to have a second user 5 in the workable zone 8, but this one has to be located as far as possible to be viewable at the same time as the first user 4, on the one hand, and as close as possible from the microphone 7 (preferably in the zone 3), to be audible. Thus, there is a challenge between the number of co-sited participants, which is restricted, and the video and audio quality level.

Referring to Figure 2, there is shown a configuration of a video telephony session on a mobile device 21, according to some embodiments of the invention.

The mobile device 21 comprises a primary camera 22.1, a secondary camera 22.2, a first -directional microphone 23.1 and a second -directional microphone 23.2. Generally, the secondary camera 22.2 is located at a front side of the mobile device 21 comprising a screen and is generally used in the system of the prior art for video telephony application (corresponding to the camera 2 represented on Figure 1). The primary camera 22.1 is generally located at a back side of the mobile device 21 and is used to record video or to acquire pictures. No restriction is attached to the location of each component of the mobile device 21. For example, the cameras can be located on other sides of the mobile devices.

It is to be noted that cameras 22.1 and 22.2 can be replaced by any picture acquisition means.

It is thus apparent, that the present invention can be, in some embodiments, implemented on already existing mobile devices, such as mobile phones and smartphones in particular, thus reducing the costs associated with its implementation.

The primary camera 22.1 can be held by a first user 24.1 and a limited zone 27 is defined based on the arm's length of the first user 24.1.

A first audio zone 25.1 is defined as a polar pattern which dimensions and position are defined by the intrinsic features and the position of the first - directional microphone 23.1.

A second audio zone 25.2 is defined as a polar pattern, which dimensions and position are defined by the intrinsic features and the position of the second -directional microphone 23.2.

No restriction is attached to the geometry of the audio zones 25.1 and 25.2 as they depend on the type of microphone (directional, omni-directional) and on its intrinsic features. According to some other embodiments of the invention, a microphone array can be used, which can be omni-directional for example. These audio zones 25.1 and 25.2 can correspond to zones in which a user's voice can be recorder with a sufficient level (which can be characterised by a signal to noise ratio level compared to a given threshold for example).

A first camera field of view 26.1 can also be defined for the primary camera 22.1 based on intrinsic features of the primary camera 22.1, such as the focal length and the direction of the primary camera 22.1.

A second camera field of view 26.2 can also be defined for the secondary camera 22.2 based on intrinsic features of the secondary 22.2 camera, such as the focal length and the direction of the secondary camera 22.2.

No restriction is attached to the angles defining the first and second camera fields of view 26.1 and 26.2. For example, the angles vary whether a wide angle camera or a small angle camera is considered.

The intersection between the second audio zone 25.2 and the second camera field of view 26.2 defines a second common zone 28.2, in which users can be located to communicate during a video telephony session, according to some embodiments of the invention. In the second common zone 28.1, the position of the first user 24.1 is limited by the limited zone 27. However, a second user 24.2 can be located in the second common zone 28.2, in order to participate to a video telephony session for example. The second user 24.2 is not constrained by the limited zone 27, as only the first speaker 24.1 is holding the mobile device 21.

In addition, the intersection between the first audio zone 25.1 and the first camera field of view 26.1 defines a first common zone 28.1, in which users can be located to communicate during a video telephony session, according to some embodiments of the invention. For example, a third user 24.3, a fourth user 24.4 and a fifth user 24.5 can be located in the first common zone 28.1 to participate to the video telephony session.

Thus, by simultaneously activating both cameras of the mobile device 21, the present invention enables to increase the number of co-sited participants to a video telephony session. Furthermore, the users 24.3, 24.4 and 24.5 are not constrained by the limited zone 27, as only the first user 24.1 is holding the mobile device 21. As it will be further explained, the present invention also enables to increase the audio and video quality level attached to the video telephony sessions.

According to some embodiments of the invention, a secondary screen can optionally be added on the back side (comprising the primary camera 22.1), so that recorded video can be displayed for all the speakers 24.1 to 24.5. Furthermore, supplementary cameras can also be added on other sides of the mobile device 21.

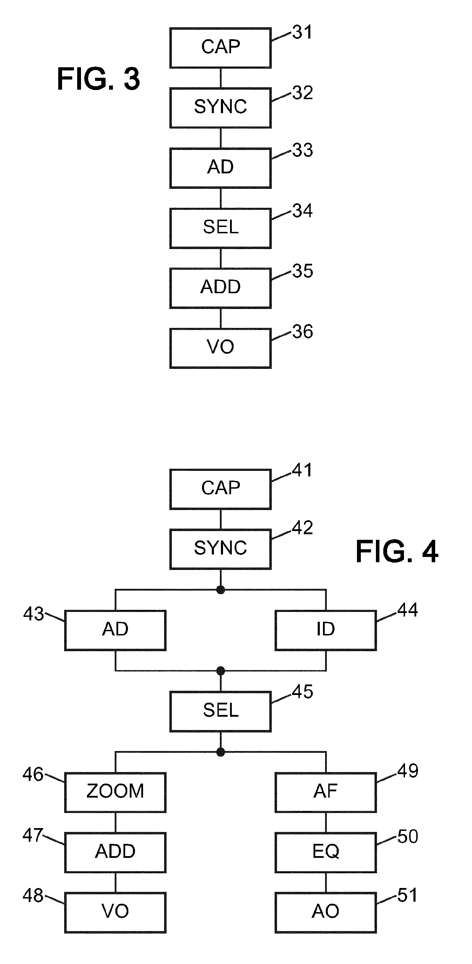

Referring now to Figure 3, there is shown a flowchart representing the steps of the method according to some embodiments of the invention.

In what follows, for the sake of better understanding, the steps that are illustrated on Figure 3 can be performed by the mobile device 21 represented on Figure 2.

Initially, both primary and secondary cameras 22.1 and 22.2 and both first and second microphones 23.1 and 23.2 can be activated. A video telephony session can be initiated by the first user 24.1, according to some embodiments of the invention. The described steps enable to provide a solution to acquire relevant data on both cameras and both microphones, in the case of a video telephony session. However, no restriction is attached to the context of use of the following steps. For example, as it will be further described, the invention can be used to record an "interview".

At step 31, the primary and secondary cameras 22.1 and 22.2 of the mobile device 21 acquire video data. Video data can consist in a given number of pictures for example. The first and second microphones 23.1 and 23.2 respectively acquire a first audio sequence and a second audio sequence at the step 31.

At step 32, video data acquired from the primary camera 22.1, the first audio sequence, video data acquired from the secondary camera 22.2 and the second audio sequence can be synchronized. Then, for example, during acquisition of first and second audio sequences, the primary camera has acquired first pictures Fᵢ and the secondary camera has acquired second pictures Sᵢ, i varying between one and a number N equal to or greater than one. For each value of i, Fᵢ and Sᵢ are associated and considered as synchronized. N depends on the duration of the first and second audio sequences.

At step 33, based on the first and second audio sequences respectively acquired by the first and second microphones 23.1 and 23.2, the mobile device 21 is adapted to determine, for each value of i, which from the first picture Fᵢ or the second picture Sᵢ contains a current speaker. For example, the first and second microphones can measure an audio signal level, which can then be compared with a threshold to determine if a current speaker is located in the first audio zone 25.1 or in the second audio zone 25.2. Under a minimum level, defined by the threshold, the audio signal in the sequence can be considered as noise and is not taken into account as significant voice element.

Then, at step 34, the mobile device 21 selects, for each value of i, the picture among the pictures Fᵢ and Sᵢ, which contains the current speaker. For example, if during a beginning period of the audio sequence, during which M pictures are acquired on each camera 22.1 and 22.2, M being comprised between 1 and N (considering in this case N being greater than 1), the fourth speaker 24.4 is speaking, then first pictures F₁ to F_{M} are selected to be concatenated in the video stream. If then, the second speaker 24.2 is speaking during an ending period of the audio sequence, second pictures S_{M+1} to S_{N} (assuming therefore that N is greater than M) are selected to be concatenated with pictures F₁ to F_{M}.

The selected pictures are then concatenated to form a video stream at step 35.

At step 36, the video stream can be recorded in the mobile device 21 or can be transmitted to a remote device (after being encoded), for example in the case of a video telephony session.

The previous steps can be performed iteratively, so that the present invention detects continuously the speaker in order to deliver relevant images in real time.

Thus, the previous steps enable to produce a single video stream containing only relevant pictures, as the current speaker is contained in the picture currently displayed. This avoids generating a resource consuming multiplexed stream comprising video issued from several cameras. Indeed, the invention enables to perform automatic video edition by switching automatically between the primary and secondary cameras 22.1 and 22.2 of the mobile device 21. Thus, this solution is particularly adapted for mobile video telephony sessions on mobile phones for example.

In addition, by using both cameras 22.1 and 22.2 of a mobile device 21, the number of co-sited participants to a mobile video telephony session is increased.

Referring now to Figure 4, there is shown a flowchart representing the steps of a method according to an enhanced implementation of the invention. This implementation enables to jointly use audio and video data to detect the location of the current speaker.

At step 41, the primary and secondary cameras 22.1 and 22.2 of the mobile device 21 acquire video data. As it has been previously explained, video data can consist in a given number of pictures for example. The first and second microphones 23.1 and 23.2 respectively acquire a first audio sequence and a second audio sequence at the step 41.

At step 42, video data acquired from the primary camera 22.1, the first audio sequence, video data acquired from the secondary camera 22.2 and the second audio sequence can be synchronized. Then, for example, during first and second audio sequences, the primary camera has acquired first pictures Fᵢ and the secondary camera has acquired second pictures Sᵢ, i varying between one and a number N, which is equal to or greater than one. For each value of i, Fᵢ and Sᵢ are associated and considered as synchronized.

At step 43, an audio analysis is performed on the first and second audio sequences to determine a location of the current speaker.

At step 44, a picture analysis algorithm can be performed to determine a location of the faces of speakers based on the pictures Fᵢ and Sᵢ that are acquired by the primary and secondary cameras 22.1 and 22.2. The step 44 can be performed in parallel to step 43 and results issued from step 44 can be combined with results issued from step 43, to determine with accuracy the location of the face of the current speaker. To this end, the image analysis determines at step 44 the different positions of the faces of speakers. This can be done by performing a face detection algorithm for example. Then, the locations of the faces of the first speaker 24.1 and of the second speaker 24.2 can be determined in each second picture Sᵢ that is acquired by the secondary camera 22.2. The locations of the faces of the third speaker 24.3, of the fourth speaker 24.4 and of the fifth speaker 24.5 can be determined in each first picture Fᵢ that is acquired by the primary camera 22.1. In addition, a size of the face of each speaker can be determined to imply the distance at which this speaker is located. The size of the face of a speaker can correspond to the distance between the skull and the chin of this speaker.

Then, the locations of the faces of the speakers can be used to perform audio analysis at step 43, and for example to perform an accurate audio space sectorisation algorithm, to determine which face among the located faces corresponds to the current speaker. Such a refinement can be done by means of a microphone array for example. To this end, a Minimum Variance Distortionless Response (MVDR) beamformer algorithm and a Direction of Arrival (DoA) can be performed. The DoA algorithm is in charge of estimating the direction of a speaker. Assuming the DoA of the desired signal is known, meaning the signal corresponding to the voice of the current speaker, the MVDR beamformer algorithm estimates the desired signal while minimizing a variance of a noise component of the formed estimate.

Alternatively, in replacement to or in combination with the accurate audio space sectorisation algorithm, a lips motion analysis can be performed to determine which face among the located faces corresponds to the current speaker.

At step 43, voice detection probabilities can be generated. At step 44, face detection probabilities can be generated. These probabilities enable to select with accuracy at step 45 a location of the face of the current speaker.

The location of the face of the current speaker enables to determine a relevant part of the common zone 28.1 or 28.2 in which the current speaker is located. In addition, the size of the face of the current speaker can also be determined.

Jointly performing steps 43 and 44 enables to increase the robustness of the current speaker audio detection. It also enables to decrease its complexity. Indeed, face detection enables to reduce the number of zones in the common zones 28.1 and 28.2 to be explored by the MVDR beamformer algorithm and thus to reduce considerably the complexity of its implementation.

At step 45, for each value i, the location of the current speaker in first picture Fᵢ or second picture Sᵢ (depending on the location of the speaker) is determined and stored for further processing. The location of the current speaker can be based on voice detection and face detection probabilities issued respectively from steps 43 and 44.

At step 46, a zoom or a crop is performed for each value of i, in the relevant part, that is to say in the face of the current speaker which has been located in picture Fᵢ or picture Sᵢ (depending on the location of the current speaker) in order to obtain relevant pictures to be concatenated in the video stream.

At step 47, the pictures obtained by zooming in the relevant part are concatenated to be included in the video stream.

At step 48, the video stream can be recorded in the mobile device 21 or can be transmitted to a remote device, for example in the case of a video telephony session.

In parallel to steps 46 to 48, a step 49 of audio focus can be performed on the current speaker face in order to increase the level of the audio signal in the first or second audio sequence in the direction of the current speaker, which has been determined at step 43. In complement, the level of the audio signal in the other directions can be attenuated. As a result, the output video stream and the output audio signal will be more understandable for participants of a mobile video telephony session. The audio focus can be done by making a microphone directivity diagram more directional in post-processing.

At step 50, the level of the audio signal in the direction of the current speaker can be equalized, by applying to the audio signal level a factor depending on the size of the current speaker face, which has been previously determined. The factor can be inversely proportional to the size of the current speaker face (and then proportional to the distance of the current speaker). Indeed, because the second speaker 24.2, the third speaker 24.3, the fourth speaker 24.4 and the fifth speaker 25.5 can stand at different distances from the mobile device 21, the level of the audio signal of the current speaker may differ from one speaker to another. As a result, certain speakers may be less understandable. By equalizing the audio signal level of the current speaker, all the speakers have the same audio signal level, whatever their distances from the mobile device 21.

Then, at step 51, the equalized audio signal can be output, to be embedded in the video stream for example.

It is to be noted that step 50 refers to an independent invention, which can be implemented in any device adapted to acquire pictures and video sequences. Upon determining a value representative of the size of the face of a current speaker, an audio level of an acquired audio sequence can be equalized based on said value. For example, a factor, which is inversely proportional to the value, can be applied to scale the audio level of the audio sequence.

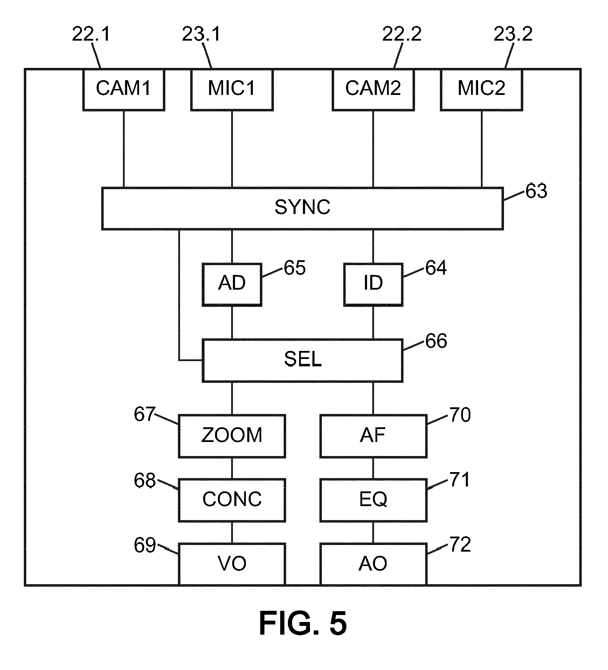

Referring now to Figure 5, there is shown a detailed structure of the mobile device 21, according to some embodiments of the invention.

As previously explained, the mobile device 21 comprises the primary and secondary cameras 22.1 and 22.2 and the first and second microphones 23.1 and 23.2.

The mobile device also comprises a synchronizing unit 63, which is adapted to synchronize video data acquired from the primary camera 22.1, the first audio sequence from the first microphone 23.1, video data acquired from the secondary camera 22.2 and the second audio sequence from the second microphone 23.2.

The synchronized data are then transmitted to an audio detection unit 65 and to an image detection unit 64, which are adapted to jointly determine the location of the face of the current speaker as explained with reference to steps 43 and 44 of Figure 4. Then the audio detection unit 65 is adapted to perform step 43 and the image detection unit 64 is adapted to perform step 44.

The synchronized data are also transmitted to a selection unit 66. The selection unit 66 is also adapted to receive voice detection probabilities and face detection probability respectively from the audio detection unit 65 and image detection unit 64.

The selection unit 66 is adapted to determine the location of the current speaker based on the voice detection probabilities. The selection unit 66 can also determine the size of the face of the current speaker.

Video data are then transmitted to a zooming unit 67 with the location of the speaker, so that the zooming unit can zoom in the face of the current speaker in each picture of the video data to obtain relevant pictures.

All relevant pictures are then transmitted to a concatenating unit 68, which is adapted to concatenate the relevant pictures to obtain a video stream.

The video stream can then be output by a video interface 69.

The selection unit 66 can also transmit the first and second audio sequences with the location of the current speaker to an audio focus unit 70. The audio focus unit 70 is adapted to increase the level of the audio signal in the first or second audio sequence in the direction of the current speaker, which has been determined by the selection unit 66. In complement, the level of the audio signal in the other directions can be attenuated by the audio focus unit 70.

The mobile device further comprises an equalizing unit 71, which is adapted to equalize the level of the audio signal in the DoA of the current speaker by applying to the audio signal level a factor depending on the size of the current speaker face, which has been previously determined by the selection unit 66.

The equalized audio signal can then be output by an audio interface 72.

It is to be noted that the video stream and the equalized audio signal can be embedded together, to be jointly transmitted or to be synchronously displayed on the mobile device 21.

It is also to be noted that the mobile device 21 can comprise at least one display means, such as a screen, to display the video stream and a loud speaker to reproduce the equalized audio signal.

The present invention thus provides a solution to create a new type of recording mode on the mobile device 21: the interview production mode. This mode allows an automatic generation of a video stream when recording an interview. Indeed, when an interviewer holding the mobile device 21 and located in the second common zone 28.2 asks a question, pictures representative of the interviewer (obtained by zooming in the face of the interviewer for example) are concatenated in the video stream, and when the interviewed answers the question, pictures representative of the interviewed (obtained by zooming in the face of the interviewed for example) are concatenated in the video stream. As previously explained, the audio level of the acquired audio signals can be equalized based on the distance of the current speaker among the interviewer and the interviewed.

Thus, the present invention enables to:
- increase the number of possible co-sited participants to an interview or to a mobile video telephony session;
- increase the audio and video quality by zooming and audio focusing in relevant zones based on the detection of a current speaker location;
- perform an automatic video edition;
- produce a single video stream so that each device participating to a mobile video telephony session can benefit from the solution;
- improve the accuracy and the quality of the recording of the current speaker communication (speaker portrait, audio focus and audio equalization);
- produce a more reliable speaker detection by means of multimodal detection (joint use of video data and audio date) with less detection errors;
- enable an interview production mode on a mobile device;

In addition, the present invention can be implemented without changing the camera arrangement on current mobile phones for example. Indeed, the present invention uses the primary camera, which is usually dedicated to standard photo and video capture, and the secondary camera.

Embodiments of the present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Embodiments of the invention have been described above in detail with reference to embodiments thereof. However, as is readily understood by those skilled in the art, other embodiments are equally possible within the scope of the present invention, as defined by the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, some embodiments of the present invention may not include all of the features described above. Therefore, it is intended that the present invention not be limited to the particular embodiments disclosed, but that the invention include all embodiments falling within the scope of the invention as broadly defined above.

A person skilled in the art will readily appreciate that various parameters disclosed in the description may be modified and that various embodiments disclosed and/or claimed may be combined without departing from the scope of the invention.

## Claims

1. A method of generating a video stream in a mobile device (21), said mobile device comprising at least first and second picture acquisition means (22.1;22.2) and at least a first and a second microphone (23.1;23.2), said first microphone and said first picture acquisition means being adapted to acquire data in a first common zone (28.1) in relation to the mobile device, said second picture acquisition means and second microphone being adapted to acquire data in a second common zone (28.2) in relation to the mobile device, wherein the method comprises:
- acquiring at least a first audio sequence from the first microphone and a second audio sequence from the second microphone;
- selecting a relevant zone comprising a current speaker among the first common zone and the second common zone, based on said first and second audio sequences;
- selecting at least one picture from the camera which is adapted to acquire data in said relevant zone;
- generating the video stream including said selected picture.

2. The method according to claim 1, further comprising, before selecting a relevant zone:
- performing a face detection algorithm by the first and second picture acquisition means (22.1 ;22.2) to respectively determine at least one relevant part of the first common zone representative of a first speaker (24.3;24.4;24.5) and at least one second relevant part of the first common zone representative of a second speaker (24.1;24.2);
wherein the relevant zone is a relevant part chosen among the first relevant part and the second relevant part, by an audio space sectorisation algorithm to determine the current speaker among the first and second speakers.

3. The method according to claim 1, wherein before selecting a relevant zone, the method comprises:
- performing a face detection algorithm by the first and second picture acquisition means (22.1 ;22.2) to respectively determine at least one relevant part of the first common zone representative of a first speaker (24.3;24.4;24.5) and at least one second relevant part of the first common zone representative of the second speaker (24.3;24.4;24.5);
wherein the relevant zone is a relevant part chosen among the first relevant part and the second relevant part, by a lips motion analysis by the first picture acquisition means in the first relevant part and by the second picture acquisition means in the second relevant part.

4. The method according to claim 2 or 3, wherein the at least one selected picture from the camera which is adapted to acquire data in said relevant zone is obtained by zooming in the relevant part.

5. The method according to anyone of the preceding claims, wherein the method further comprises selecting the audio sequence from the microphone (23.1;23.2) which is adapted to acquire data in the relevant zone, and wherein said selected audio sequence is embedded in the video stream.

6. The method according to claims 2 and 5 or to claims 3 and 5, wherein the method further comprises, after selecting the audio sequence:
- modifying the selected audio sequence by performing an audio focus in the relevant part, the modified audio sequence being embedded in the video stream.

7. The method according to claim 6, wherein modifying the selected audio sequence also comprises decreasing an audio signal level in at least one part of a zone which differs from the relevant part.

8. The method according to anyone of claims 5 to 7, wherein the method further comprises:
- measuring a size of a face of the current speaker;
- equalizing said selected audio sequence based on the measured size;
wherein the equalized audio sequence is embedded in the video stream.

9. The method according to anyone of the preceding claims, wherein the first and second microphones (23.1; 23.2) are directional.

10. The method according to anyone of claims 1 to 9, wherein selecting a relevant zone is based on a comparison between a first audio signal level of the first audio sequence and a second audio signal level of the second audio sequence.

11. A mobile device comprising at least first and second picture acquisition means (22.1;22.2), the mobile device (21) further comprising at least a first and a second microphone (23.1;23.2), said first microphone and said first picture acquisition means being adapted to acquire data in a first common zone (28.1), said second picture acquisition means and second microphone being adapted to acquire data in a second common zone (28.2), wherein the first microphone is adapted to acquire a first audio sequence and the second microphone is adapted to acquire a second audio sequence, the device further comprising:
- a zone selection unit (64;65) for selecting a relevant zone comprising a current speaker among the first common zone and the second common zone, based on said first and second audio sequences;
- a picture selection unit (66) for selecting at least one picture from the camera which is adapted to acquire data in said relevant zone;
- a stream generation unit (69;72) for generating a video stream including said selected picture.

12. The device according to claim 11 further comprising an audio selection unit (66) for selecting the audio sequence from the microphone which is adapted to acquire data in the relevant zone, and wherein the video stream further includes said selected audio sequence.

13. The device according to claim 11 or 12, wherein the first and second microphones (23.1; 23.2) are directional.

14. The mobile device according to anyone of claims 11 to 13, wherein the first picture acquisition means (22.1) are located at a first side of the mobile device (21) and the second picture acquisition means (22.2) are located on a second side of the mobile device, wherein the mobile device further comprises first and second displaying means, said first and second displaying means being respectively located on the first side and on the second side and being adapted to display said video stream.

15. A computer program product comprising a computer readable medium having stored thereon computer program instructions loadable into a computing device and adapted to - when loaded into and executed by said computing device - cause the computing device to perform a method according to anyone of claims 1 to 10.
